# EUROPEAN PATENT APPLICATION

(11) **EP 4 296 240 A1**
(43) Date of publication of application: **27.12.2023**
(21) Application number: 22807131.2
(22) Date of filing: 08.03.2022
(51) Int. Cl.: C02F 1/461

(54) **ELECTROLYSIS TANK AND WATER FEEDING DEVICE**

(30) Priority: 13.05.2021 JP 2021081364
(71) Applicant: Nihon Trim Co., Ltd., Osaka 531-0076 (JP)
(72) Inventor: AMENOMORI, Daiji, Nankoku-shi, Kochi 783-0060 (JP)
(74) Representative: Manitz Finsterwald Patent- und Rechtsanwaltspartnerschaft mbB
(86) International application number: PCT/JP2022/009894
(87) International publication number: WO 2022/239424

(57) **Abstract**

An electrolytic cell for electrolyzing a liquid, comprises an electrolysis chamber to which the liquid is supplied, a solid polymer membrane defining at least a portion of an outer edge of the electrolysis chamber, a first electrode in contact with a first surface of the solid polymer membrane in the electrolysis chamber, and a second electrode in contact with a second surface different from the first surface of the solid polymer membrane outside the electrolysis chamber.

## Description

### Technical Field

The present invention relates to an electrolytic cell and the like for electrolyzing a liquid.

### Background Art

Conventionally, a variety of electrolytic cells have been proposed. For example, Patent Document 1 discloses an electrolytic cell in which a first pole chamber and a second pole chamber are defined by a solid polymer membrane.

### Citation List

### Patent literature

Patent Document 1: JP 2017-209625

### Summary of Invention

### Technical Problem

However, the above-mentioned electrolytic cell has a structure in which the first pole chamber and the second pole chamber are formed inside the electrolytic cell, and the electrolytic cell is complicated and enlarged.

The present invention has been made in view of the above circumstances and has a main object to provide a simple and compact electrolytic cell and the like.

### Solution to Problem

An electrolytic cell according to the present invention is an electrolytic cell for electrolyzing a liquid, comprising
an electrolysis chamber to which the liquid is supplied,
a solid polymer membrane defining at least a portion of an outer edge of the electrolysis chamber,
a first electrode in contact with a first surface of the solid polymer membrane in the electrolysis chamber, and
a second electrode in contact with a second surface different from the first surface of the solid polymer membrane outside the electrolysis chamber.

In the electrolytic cell according to the present invention, it is preferable that at least a part of the first electrode is disposed opposite the second electrode with the solid polymer membrane interposed therebetween.

In the electrolytic cell according to the present invention, it is preferable that the second electrode comprises at least a part of an outer wall of the electrolytic cell.

In the electrolytic cell according to the present invention, it is preferable that the first electrode, the solid polymer membrane, and the second electrode have cylindrical portions at least partially cylindrically formed.

In the electrolytic cell according to the present invention, it is preferable that the first electrode, the solid polymer membrane, and the second electrode are provided with a supply port for supplying the liquid along the circumferential direction of the cylindrical portion of the first electrode.

In the electrolytic cell according to the present invention, it is preferable that the electrolysis chamber is provided with a slope for spirally guiding the liquid along the circumferential direction of the cylindrical portion of the first electrode.

A water supply device according to the present invention comprises the above-mentioned electrolytic cell.

In the water supply device according to the present invention, it is preferable that the device further comprises a power generation device for generating power by being driven by the liquid flowing into the electrolysis chamber or the liquid flowing out of the electrolysis chamber and supplying power to the first electrode and the second electrode.

In the water supply device according to the present invention, it is preferable that the device preferably includes a shower head.

### Advantageous Effects of Invention

In the electrolytic cell according to the present invention, the solid polymer membrane defines at least a part of the outer edge of the electrolysis chamber. The first surface of the solid polymer membrane faces into the electrolysis chamber and contacts the first electrode. On the other hand, the second surface of the solid polymer membrane faces out of the electrolysis chamber and contacts the second electrode. That is, solid polymer membranes of conventional electrolytic cells divide the electrolysis chambers into a first chamber on the first electrode side and a second chamber on the second electrode side, whereas the solid polymer membrane of the present invention defines the outer edge of the electrolysis chamber. As a result, the conventional second chamber can be omitted, and a simple and compact electrolytic cell can be obtained.

### Brief Description of Drawings

FIG. 1 is a cross-sectional view of a schematic configuration of an electrolytic cell of the present invention;
FIG. 2 is a partial cutaway perspective view of a modification of the electrolytic cell of FIG. 1;
FIG. 3 is a cross-sectional view showing a modification of the electrolytic cell of FIG. 2;
FIG. 4 is a partial cutaway perspective view of a modification of the electrolytic cell of FIG. 3;
FIG. 5 is a cross-sectional view showing a schematic configuration of a water supply device including the electrolytic cell of FIG. 1;
FIG. 6 is a cross-sectional view showing a modification of the water supply device of FIG. 5; and
FIG. 7 is a partial cutaway perspective view of the water supply device of FIG. 6.

### Description of Embodiments

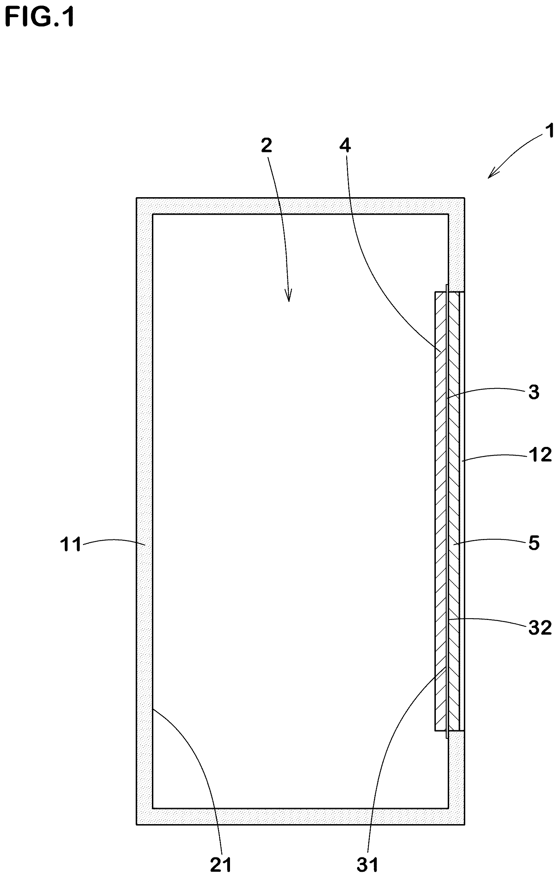

An embodiment of the present invention will now be described with reference to the drawings. FIG. 1 shows a schematic configuration of an electrolytic cell 1 according to the present embodiment.

The electrolytic cell 1 includes an electrolysis chamber 2, a solid polymer membrane 3, a first electrode 4, and a second electrode 5.

An outer edge 21 of the electrolysis chamber 2 is surrounded by an outer wall 11 of the electrolytic cell 1. The outer wall 11 is composed of, for example, an insulator such as a synthetic resin.

The electrolysis chamber 2 is supplied with liquid to be electrolyzed in the electrolytic cell 1. For example, water such as tap water, well water, ground water, and the like can be used as the liquid. Liquids other than water or water to which additives such as electrolytic aids are added may be provided.

For example, a fluorine-based resin material having a sulfonic acid group is applied to the solid polymer membrane 3. When the solid polymer membrane 3 of such a resin material is used to electrolyze water, the pH of the liquid can be kept constant before and after electrolysis.

The solid polymer membrane 3 defines at least a part of the outer edge 21 of the electrolysis chamber 2. That is, the outer edge 21 of the electrolysis chamber 2 of the present embodiment is defined by the outer wall 11 of the electrolytic cell 1 and the solid polymer membrane 3.

The solid polymer membrane 3 includes a first surface 31 facing the inside of the electrolysis chamber 2 and a second surface 32 facing the outside of the electrolysis chamber 2. The liquid supplied to the electrolysis chamber 2 permeates the solid polymer membrane 3. This maintains the solid polymer membrane 3 wet from the first surface 31 to the second surface 32. Even when a solid polymer membrane 3 having insufficient liquid permeability is applied, the second surface 32 of the solid polymer membrane 3 may become wet with the surface of the second electrode 5 by moisture (water droplets or water vapor contained in the air) outside the electrolysis chamber 2.

For the first electrode 4, a structure that allows water to flow back and forth in the direction of its thickness, for example, a net-like metal such as expanded metal, can be used. In the present embodiment, a titanium expanded metal having a surface coated with a platinum plating layer is used for the first electrode 4. A plate-shaped perforated metal with one or more through holes can be applied to the first electrode 4.

The first electrode 4 is provided in the electrolysis chamber 2. The first electrode 4 is arranged in contact with the first surface 31 of the solid polymer membrane 3.

Similar to the first electrode 4, the second electrode 5 has a structure in which water can flow back and forth in the plate thickness direction, for example, a titanium expanded metal having a surface coated with a platinum plating layer is used. A metal plate having a structure in which water cannot flow back and forth in the plate thickness direction may be used for the second electrode 5.

The second electrode 5 is provided outside the electrolysis chamber 2. The second electrode 5 is arranged in contact with the second surface 32 of the solid polymer membrane 3. This can suppress the expansion of the solid polymer membrane 3 due to the internal pressure of the electrolysis chamber 2.

By applying an electrolytic voltage for electrolysis to the first electrode 4 and the second electrode 5, different polarities are applied to the first electrode 4 and the second electrode 5.

In the electrolytic cell 1 of the present embodiment, the electrolytic voltage is applied such that the first electrode 4 functions as a cathode and the second electrode 5 functions as an anode. When water is electrolyzed using such an electrolytic cell 1, hydrogen gas is generated in the electrolysis chamber 2 and then dissolved in the electrolytic water generated in the electrolysis chamber 2. Such electrolytic water, also referred to as "electrolyzed hydrogen water", is expected to be applied in a variety of fields, such as drinking, as well as bathing. Additionally, in the second electrode 5, oxygen gas is generated by the electrolysis, but since the electrode is provided outside the electrolysis chamber 2, the oxygen gas is discharged to the outside of the electrolytic cell 1 without being dissolved in the electrolytic water. That is, the gas generated on the second electrode 5 side can be discharged without providing the electrolytic cell 1 with the second chamber.

An electrolytic voltage may be applied such that the first electrode 4 and the second electrode 5 respectively function as an anode and a cathode. When water is electrolyzed using such an electrolytic cell 1, oxygen gas is generated in the electrolysis chamber 2.

When liquid is supplied into the electrolysis chamber 2 and a voltage is applied between the first electrode 4 and the second electrode 5 in a state where the solid polymer membrane 3 is wetted by the liquid, current flows through the solid polymer membrane 3 to the first electrode 4 and the second electrode 5, and electrolysis occurs in the electrolysis chamber 2.

The solid polymer membrane of the conventional electrolytic cell divides the electrolysis chamber into a first chamber on the first electrode side and a second chamber on the second electrode side, whereas the solid polymer membrane 3 of the present invention defines the outer edge 21 of the electrolysis chamber 2. Thus, a conventional second chamber can be omitted and a simple and compact electrolytic cell 1 is obtained.

In the electrolytic cell 1 of the present embodiment, a window 12 passing through the outer wall 11 is opened in a part of the outer wall 11, and the solid polymer membrane 3 is disposed so as to close the window 12 from the inside of the cell. Such a solid polymer membrane 3 defines a portion of the outer edge 21 of the electrolysis chamber 2. The solid polymer membrane 3 defines a part of the outer edge 21 of the electrolysis chamber 2.

The outer periphery of the solid polymer membrane 3 extends outwardly over the peripheral edge of the window 12 and is firmly fixed to the outer wall 11 without a gap. This can suppress liquid leakage from between the solid polymer membrane 3 and the outer wall 11. The second electrode 5 is disposed inside the window 12. The second electrode 5 is exposed to the outside of the electrolytic cell 1 through the window 12 to form a part of the outer wall of the electrolytic cell 1. In a configuration in which the entire outer edge 21 of the electrolysis chamber 2 is defined by the solid polymer membrane 3, it is preferable that the second electrode 5 constitutes the entire outer wall of the electrolytic cell 1.

Preferably, the first electrode 4 is disposed opposite the second electrode 5 with the solid polymer membrane 3 interposed therebetween. In this embodiment, the entire first electrode 4 faces the second electrode 5 via the solid polymer membrane 3. This can easily enhance the efficiency of electrolysis. Only a part of the first electrode 4 may face the second electrode 5 across the solid polymer membrane 3.

By providing the window 12, gas generated on the second electrode 5 side during electrolysis can be discharged to the outside of the electrolytic cell 1.

It should be noted that the entire outer edge 21 of the electrolysis chamber 2 may be defined by the solid polymer membrane 3. In this case, the outer wall 11 is omitted and the second electrode 5 is preferably disposed on the entire second surface 32 of the solid polymer membrane 3. As a result, not only the outer wall 11 is omitted, but also the electrolysis proceeds on the entire outer edge 21 of the electrolysis chamber 2, and the efficiency of the electrolysis can be easily increased.

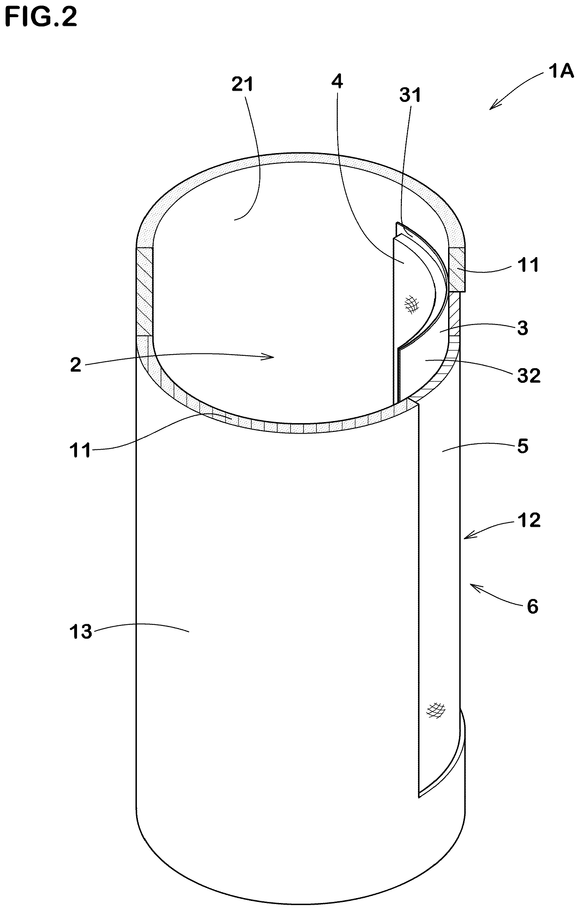

FIG. 2 is a perspective view of an electrolytic cell 1A, which is a modification of the electrolytic cell 1 of FIG. 1. The configuration of the electrolytic cell 1 described above can be used for the portions of the electrolytic cell 1A not described below.

In the electrolytic cell 1A, the first electrode 4, the solid polymer membrane 3, and the second electrode 5 have cylindrical portions 6 formed in a cylindrical shape.

Since the cylindrical portions 6 are formed on the first electrode 4, the solid polymer membrane 3, and the second electrode 5, the liquid easily flows along the circumferential direction of the cylindrical portion 6 inside the first electrode 4, and stagnation of the liquid is suppressed. In addition, the liquid flowing along the circumferential direction is pressed against the first electrode 4 by its centrifugal force. As a result, the gas generated on the surface of the first electrode 4 with electrolysis is subjected to the pressure of the liquid and is peeled off early from the first electrode 4. This can easily produce an electrolyte containing fine bubbles.

In this embodiment, the entire first electrode 4, solid polymer membrane 3, and second electrode 5 are formed as a cylindrical portion 6. This easily produces an electrolyte that is rich in fine bubbles. It should be noted that the cylindrical portions 6 may be formed in at least a part of the first electrode 4, the solid polymer membrane 3, and the second electrode 5.

As shown in FIG. 2, in the electrolytic cell 1A of the present embodiment, the outer wall 11 has a cylindrical portion 13 formed in a cylindrical shape. The cylindrical portion 13 is formed continuously with the cylindrical portions 6. As a result, the velocity of the liquid flowing along the circumferential direction of the cylindrical portions 6 and the cylindrical portion 13 is maintained high, the centrifugal force acting on the liquid is increased, and the electrolytic solution containing fine bubbles is more easily generated. The cylindrical portion 13 is preferably formed over the entire circumference of the cylindrical electrolytic cell 1A by cooperation with the cylindrical portions 6. This allows the electrolyte containing fine bubbles to be more easily produced since the velocity of the liquid is maintained higher.

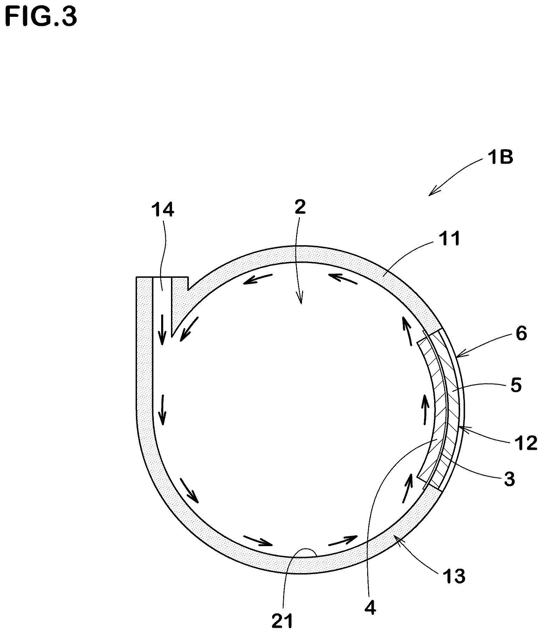

FIG. 3 is a perspective view of an electrolytic cell 1B, which is a modification of the electrolytic cell 1A of FIG. 2. The configuration of the electrolytic cell 1A described above can be used for the portions of the electrolytic cell 1B not described below.

In the electrolytic cell 1B, a supply port 14 is formed in the outer wall 11. In FIG. 3, the arrows depicted in the electrolysis chamber indicate the flow of liquid in the electrolysis chamber 2 supplied from the supply port 14.

The supply port 14 is formed such that liquid flows along the circumferential direction of the cylindrical portion 6 of the first electrode 4. For example, the supply port 14 of the present embodiment extends in the tangential direction of the cylindrical portion 13 and is opened in the cylindrical portion 13. With such a configuration, since the liquid flowing from the supply port 14 flows smoothly along the circumferential direction of the cylindrical portion 6 of the first electrode 4, the speed of the liquid is kept high, and the electrolytic solution containing fine bubbles is more easily generated. The supply port 14 may be formed at the bottom of the outer wall 11.

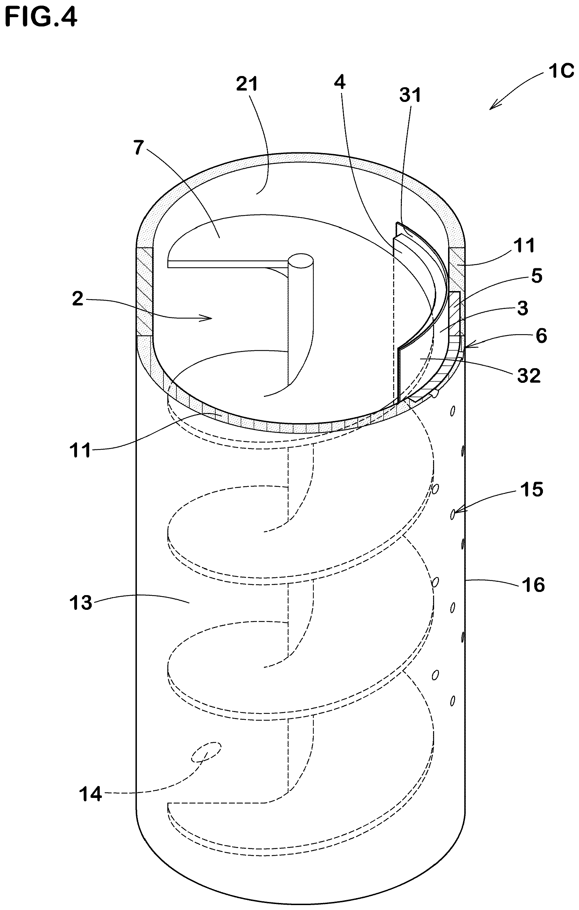

FIG. 4 is a perspective view of an electrolytic cell 1C, which is a modification of the electrolytic cell 1B of FIG. 3. The configuration of the electrolytic cell 1B described above can be used for the portion of the electrolytic cell 1C not described below.

In the electrolytic cell 1C, a slope 7 is provided in the electrolysis chamber 2. The slope 7 is a so-called helical slope formed spirally. The liquid flowing from the supply port 14 is spirally guided by the slope 7 along the circumferential direction of the cylindrical portion 6 of the first electrode 4. The slope 7 allows the liquid to flow smoothly, so that the speed of the liquid is kept high and the electrolyte containing fine bubbles is more easily produced. Also, since the liquid is smoothly guided in the axial direction of the cylindrical portion 6 by the slope 7, the inflow of the liquid from the supply port 14 becomes smooth.

From the point of view of the miniaturization of the bubbles, it is preferable that the slope 7 of the present embodiment is formed over the entire axial area of the cylindrical electrolysis chamber 2. The slope 7 may be formed over both axial ends of the cylindrical portion 6 of the first electrode 4, or it may be formed in at least a part of the area of the cylindrical portion 6 of the first electrode 4.

As shown in FIG. 4, in the electrolytic cell 1C, a plurality of windows 15 opened in a slit shape may be formed. The plurality of windows 15 are arranged so as to be aligned in the axial direction of the cylindrical outer wall 11. Each window 15 penetrates the outer wall 11 in the thickness direction and extends in the circumferential direction of the outer wall 11. Some regions of the second electrode 5 are exposed to the outside of the electrolytic cell 1 through the windows 15. This allows moisture to adhere to the second surface 32 of the solid polymer membrane 3 and the surface of the second electrode 5.

In addition, each portion between the windows 15 of the outer side of the second electrode 5 is covered by the outer wall 16. The area of the second electrode 5 covered by the outer wall 16 may also be wetted by water droplets or water vapor entering from the windows 15.

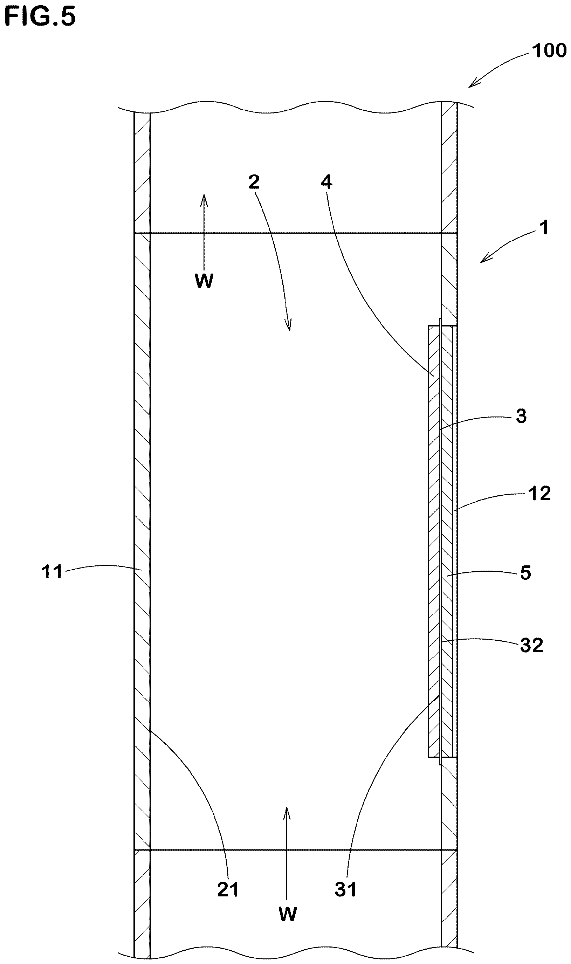

FIG. 5 shows a water supply device 100 with the electrolytic cell 1. As already mentioned, the electrolytic cell 1 has a simple and compact configuration and can be easily incorporated into the water supply device 100. In the water supply device 100, the electrolysis chamber 2 of the electrolytic cell 1 constitutes a part of the water supply path W. The water supply device 100 electrolyzes the raw water flowing into the electrolysis chamber 2 to generate electrolytic water and supplies it to the outside of the device. Any one of the electrolytic cells 1A through 1C may be used in place of the electrolytic cell 1 in the water supply device 100.

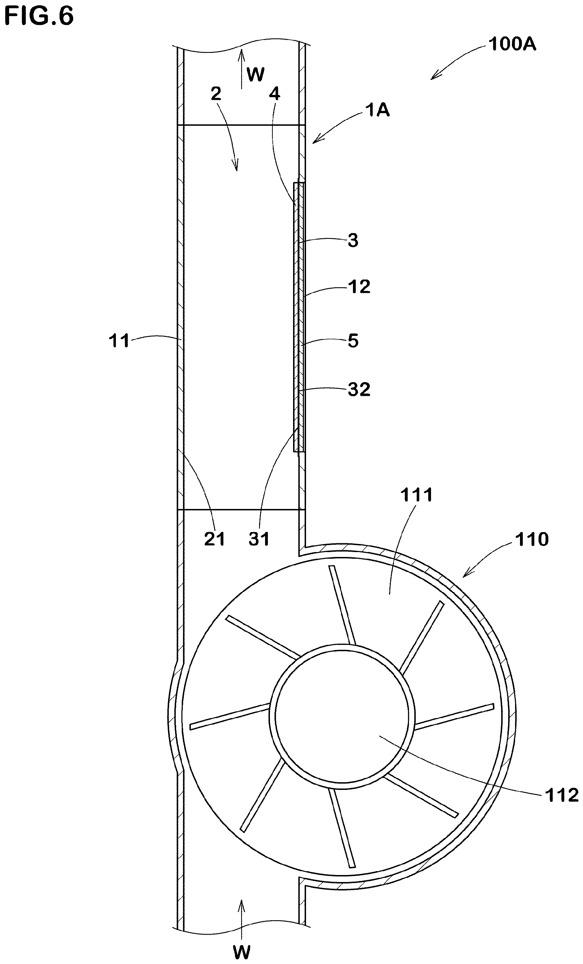

FIG. 6 shows a water supply device 100A that is a modification of the water supply device 100 of FIG. 5. The configuration of the water supply device 100 described above may be employed for the portions of the water supply device 100A not described below.

The water supply device 100A includes the electrolytic cell 1A and a power generation device 110 which is driven by liquid flowing into the electrolysis chamber 2 and generates power. Any one of the electrolytic cells 1, 1B, and 1C may be used instead of the electrolytic cell 1A. The power generation device 110 is disposed upstream of the electrolytic cell 1A. The power generation device 110 may be in the form of being driven by liquid that has flowed out of the electrolysis chamber 2. In this case, the power generation device 110 is disposed downstream of the electrolytic cell 1.

The power generation device 110 includes a rotation unit 111 that is driven by liquid and rotates, and a power generation unit 112 which converts the rotational force of the rotation unit 111 into electric power. For example, a turbine having a rotor is applied to the rotation unit 111. The liquid flowing into the power generation device 110 flows into the electrolysis chamber 2 after rotationally driving the turbine of the rotation unit 111. The rotation unit 111 is rotatably connected to the power generation unit 112. Accordingly, the rotational force of the rotation unit 111 is transmitted to the power generation unit 112 and is supplied to the power source of the power generation.

The power generation device 110 of the present embodiment is connected in series with an electrode pair composed of the first electrode 4 and the second electrode 5 (not shown). The power generation device 110 powers the first electrode 4 and the second electrode 5. Thus, in the water supply device 100A, the electric circuit composed of the electrode pair and the power generation device 110 is completed inside the water supply device 100A, and power supply from the outside of the water supply device 100A is not required. Accordingly, the configuration of the water supply device 100A can be simplified.

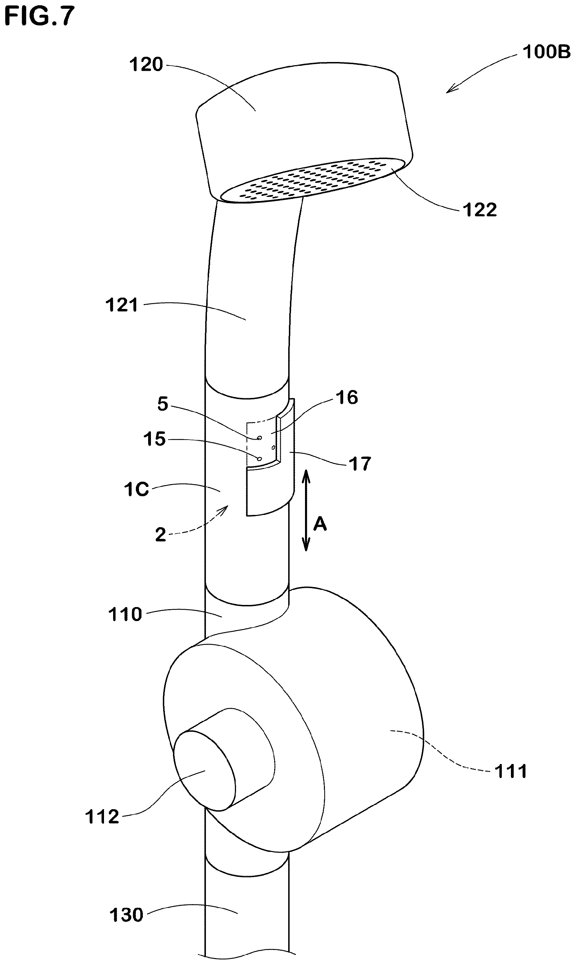

FIG. 7 shows a water supply device 100B which is a modification of the water supply device 100A of FIG. 6. Configurations of the water supply device 100A described above can be used for the portions of the water supply device 100B not described below.

The water supply device 100B includes the electrolytic cell 1C and a power generation device 110, and further includes a shower head 120. Any one of the electrolytic cells 1, 1A and 1B may be used in place of the electrolytic cell 1C.

The shower head 120 is disposed on the distal end side of the flexible shower hose 130. The power generation device 110 is provided between the shower hose 130 and the shower head 120. That is, the shower head 120 is located downstream of the power generation device 110.

The shower head 120 includes a cylindrical body portion 121 and a discharge portion 122 provided at a distal end portion of the body portion 121. The electrolytic cell 1C is provided in the body portion 121 of the shower head 120. That is, the electrolytic cell 1C constitutes a part of the body portion 121. Since the electrolytic cell 1C of the present invention has a simple and compact configuration, it is possible to incorporate the electrolytic cell 1C into the shower head 120 without enlarging the shower head 120.

In the present water supply device 100B, the electrolytic cell 1C is disposed downstream of the power generation device 110. In such a configuration, the tip of the shower hose 130 is connected to the power generation device 110.

The electrolytic cell 1C may be disposed upstream of the power generation device 110. In such a configuration, the tip portion of the shower hose 130 is connected to the electrolytic cell 1C, and the power generation device 110 is provided between the electrolytic cell 1C and the body portion 121.

In any configuration, the electrolytic water generated in the electrolysis chamber 2 of the electrolytic cell 1 passes through the inside of the body portion 121 and is discharged from the discharge portion 122. This makes it possible to readily use the shower of electrolyzed water. Further, in the present water supply device 100B, since the electrolytic solution containing fine bubbles is generated by the electrolytic cell 1C, the shower of the electrolytic solution containing fine bubbles can be readily used.

In addition, the electricity obtained by the power generation device 110 can be used to electrolyze in the electrolytic cell 1C, completing the electrical circuit between the shower hose 130 and the shower head 120. Accordingly, since there is no need to construct a power supply cable on a wall surface or the like such as a shower room, it becomes possible to easily introduce a shower facility of electrolytic water. Additionally, since there is no need to arrange a power supply cable inside the shower hose 130 or along the shower hose 130, a trouble due to disconnection or the like is avoided.

It should be noted that the power generation device 110 and the electrolytic cell 1C may be provided on the base end of the shower hose 130, for example, a mixed faucet. Even in such a configuration, since there is no need to construct a power supply cable on a wall surface or the like such as a shower room, it becomes possible to easily introduce a shower facility of electrolytic water.

As shown in FIG. 7, the outside of the electrolytic cell 1C may be provided with a cover member 17 that covers a part or all of the windows 15. In this Figure, a portion of the cover member 17 is depicted as being broken.

The cover member 17 in this embodiment is configured to open and close by moving back and forth with respect to the electrolytic cell 1C with arrow A. The cover member 17 may be configured to be openable and closable by rotating with respect to the electrolytic cell 1C. By opening the cover member 17, oxygen gas generated by electrolysis is discharged to the outside of the water supply device 100B through the windows 15.

In the water supply device 100B in water passage, the wet state of the solid polymer membrane 3 is maintained by the water supplied into the electrolysis chamber 2. On the other hand, in the water supply device 100B where the water flow is stopped, the moisture on the surface of the solid polymer membrane 3 may evaporate due to the passage of time and the wet state of the membrane may be lost. The dried solid polymer membrane 3 shrinks. The water flow then causes the solid polymer membrane 3 that has returned to a wet state to be distorted when compared to an initial state, so that the contact area between the membrane and each of the first electrode 4 and the second electrode 5 decreases and the efficiency of electrolysis can be reduced.

In the present water supply device 100B, drying of the solid polymer membrane 3 is suppressed by closing the windows 15 by the cover member 17. This suppresses a decrease in the efficiency of electrolysis. The cover member 17 may be provided in the electrolytic cells 1, 1A, 1B or 1C of FIGS. 1 to 6.

While the electrolytic cells 1 and the like according to the present invention have been described in detail, the present invention is embodied without limitation to the specific embodiments described above. That is, the electrolytic cell 1 according to the present invention may include an electrolysis chamber 2 to which a liquid is supplied, a solid polymer membrane 3 that defines at least a portion of the outer edge 21 of the electrolysis chamber 2, a first electrode 4 that is in contact with the first surface 31 of the solid polymer membrane 3 in the electrolysis chamber 2, and a second electrode 5 that is in contact with the second surface 32 of the solid polymer membrane 3 outside the electrolysis chamber 2.

### Reference Signs List

- 1: electrolytic cell
- 1A: electrolytic cell
- 1B: electrolytic cell
- 1C: electrolytic cell
- 2: electrolysis chamber
- 3: solid polymer membrane
- 4: first electrode
- 5: second electrode
- 6: cylindrical portion
- 7: slope
- 11: outer wall
- 13: cylindrical portion
- 14: supply port
- 21: outer edge
- 31: first surface
- 32: second surface
- 100: water supply device
- 100A: water supply device
- 100B: water supply device
- 110: power generation device
- 120: shower head

## Claims

1. An electrolytic cell for electrolyzing a liquid, comprising
an electrolysis chamber to which the liquid is supplied,
a solid polymer membrane defining at least a portion of an outer edge of the electrolysis chamber,
a first electrode in contact with a first surface of the solid polymer membrane in the electrolysis chamber, and
a second electrode in contact with a second surface different from the first surface of the solid polymer membrane outside the electrolysis chamber.

2. The electrolytic cell as set forth in claim 1, wherein
at least a part of the first electrode is disposed opposite the second electrode with the solid polymer membrane interposed therebetween.

3. The electrolytic cell as set forth in claim 1 or 2, wherein
the second electrode comprises at least a part of an outer wall of the electrolytic cell.

4. The electrolytic cell as set forth in any one of claims 1 to 3, wherein
the first electrode, the solid polymer membrane, and the second electrode have cylindrical portions at least partially cylindrically formed.

5. The electrolytic cell as set forth in claim 4, wherein
the first electrode, the solid polymer membrane, and the second electrode are provided with a supply port for supplying the liquid along the circumferential direction of the cylindrical portion of the first electrode.

6. The electrolytic cell as set forth in claim 4, wherein
the electrolysis chamber is provided with a slope for spirally guiding the liquid along the circumferential direction of the cylindrical portion of the first electrode.

7. A water supply device comprising the electrolytic cell as set forth in any one of claims 1 to 6.

8. The water supply device as set forth in claim 7, further comprising a power generation device for generating power by being driven by the liquid flowing into the electrolysis chamber or the liquid flowing out of the electrolysis chamber and supplying power to the first electrode and the second electrode.

9. The water supply device as set forth in claim 8, comprising a shower head.
